Europäisches Patentamt

European Patent Office

Office européen des brevets

(11) Numéro de publication: **0 246 962 B1**

# (12) FASCICULE DE BREVET EUROPEEN

(45) Date de publication de fascicule du brevet:
19.06.91

(51) Int. Cl.⁵: **G21C 3/32, G21C 3/322**

(21) Numéro de dépôt: 87401115.8

(22) Date de dépôt: **18.05.87**

(54) **Assemblage combustible à grilles anti-corrosion.**

(30) Priorité: 20.05.86 FR 8607133

(43) Date de publication de la demande:
25.11.87 Bulletin 87/48

(45) Mention de la délivrance du brevet:
19.06.91 Bulletin 91/25

(84) Etats contractants désignés:
BE CH DE ES GB IT LI SE

(56) Documents cités:
EP-A- 0 148 452
EP-A- 0 187 578
FR-A- 2 302 570

NUCLEAR ENGINEERING INTERNATIONAL,
vol. 30, no. 374, septembre 1985, pages
53-55, Sutton, Surrey, GB; W.L. ORR et al.:
"Westinghouse introduces new fuel for
PWRS and BWRS"

Idem

(73) Titulaire: **FRAMATOME**
**Tour Fiat 1, Place de la Coupole**
**F-92400 Courbevoie(FR)**

Titulaire: **COMPAGNIE GENERALE DES MATIE-**
**RES NUCLEAIRES (COGEMA)**
**2, rue Paul Dautier B.P. 4**
**F-78141 Velizy-Villacoublay(FR)**

(72) Inventeur: **Thomazet, Joel**
**34 R.N.**
**F-69330 Pusignan(FR)**
Inventeur: **Kolmayer, André**
**37 Rue de la Bourse**
**F-69002 Lyon(FR)**

(74) Mandataire: **Fort, Jacques et al**
**CABINET PLASSERAUD 84, rue d'Amsterdam**
**F-75009 Paris(FR)**

## Description

L'invention concerne les assemblages de combustible pour réacteur nucléaire refroidi par un réfrigérant traversant le coeur du bas vers le haut, comportant un faisceau de crayons combustibles munis d'une gaine métallique, les crayons étant maintenus selon un réseau de pas déterminé au moyen de plusieurs grilles d'espacement disposées à intervalles donnés.

Elle trouve une application particulièrement importante, bien que non exclusive, dans le domaine des assemblages pour réacteurs nucléaires à eau sous pression, dits PWR, pour lesquels la gaine métallique des crayons est en alliage de zirconium.

Dans les assemblages de combustible du type qui vient d'être décrit, les grilles remplissent un certain nombre de fonctions distinctes. D'une part elles supportent latéralement et elles entretoisent les crayons de combustible contenant la matière fissile. Elles assurent également la résistance aux chocs transversaux que peuvent subir les assemblages lors des manutentions, lors d'incidents d'origine sismique ou lors d'incidents de fonctionnement. D'autre part ces grilles assurent le mélange du réfrigérant traversant le coeur du bas vers le haut. Il est en effet important d'assurer un aussi bon mélange que possible du réfrigérant pour permettre une extraction optimale de la chaleur dégagée par les crayons contenant la matière fissile, et éviter des augmentations locales de température risquant d'entraîner des ébullitions locales. On peut ainsi obtenir une élévation globale d'enthalpie répartie transversalement de façon plus homogène dans le coeur, afin d'utiliser ce dernier à sa puissance de sortie maximale, tout en évitant ce dernier type de phénomène, c'est-à-dire en conservant un taux d'amorçage d'ébullition nucléée acceptable.

On connaît déjà différents types d'assemblage comportant des grilles d'espacement réalisant ces fonctions. Ainsi, les assemblages nucléaires connus de l'art antérieur de réacteurs PWR comprennent des grilles disposées à intervalles réguliers du haut en bas de l'assemblage. De plus l'article "westinghouse introduces new fuel for PWR$_s$ and BWR$_s$ " (Nuclear Engineering Int., vol. 30, n° 374, pp. 53-55) et le document EP-A-0 148 452 font connaître un assemblage combustible comprenant, en plus de grilles classiques de maintien latéral des crayons, réparties régulièrement tout le long de l'assemblage, des grilles de mélange placées entre les grilles classiques supérieures. Le document EP-A-0 187 578, publié postérieurement à la date de priorité de la présente demande, décrit par ailleurs un assemblage comprenant un squelette comportant deux pièces d'extrémités reliées par des éléments allongés tels que des tubes-guides et plusieurs grilles réparties le long des tubes-guides et formant des cellules de maintien d'un faisceau de crayons de combustible aux noeuds d'un réseau régulier. Ces grilles sont de plusieurs types différents et peuvent être considérées comme réparties entre grilles médianes, conçues de façon à résister aux chocs latéraux et munies d'ailettes de création de turbulence dans l'écoulement du réfrigérant le long de l'assemblage, grilles basses et grilles hautes assurant l'entretoisement des crayons, et imposant au réfrigérant une perte de charge plus faible que les grilles médianes.

Cette solution permet de résoudre de nombreux problèmes. Cependant, dans le cas particulier des gaines en alliage à base de zirconium, la corrosion en partie haute des crayons peut apparaître dans des proportions plus importantes qu'en partie basse.

Il est connu que les phénomènes de corrosion, sont fonction de la température, et de la puissance locale, et que la température du réfrigérant régnant en haut du coeur est forcément plus importante qu'en partie basse. Ces deux facteurs : température du réfrigérant et puissance locale dégagée, pouvaient expliquer à l'homme de l'art cette corrosion différentielle, mais en lui faisant apparaître ce phénomène comme inévitable.

La présente invention vise à fournir un assemblage combustible pour coeur de réacteur nucléaire répondant mieux que ceux antérieurement connus aux exigences de la pratique, notamment en ce que la corrosion de la partie haute des crayons est réduite.

Pour arriver à ce résultat, il a tout d'abord été nécessaire d'effectuer une nouvelle analyse des phénomènes et de prendre conscience de l'existence de causes d'accélération de la corrosion de la partie haute. Cette analyse a conduit à formuler l'hypothèse que la couche d'oxyde formée sur la gaine du fait de la corrosion augmentait la résistance à l'échange thermique du crayon vers l'eau sous pression, donc aggravait la corrosion. Et, du fait que la formation est plus rapide à la partie haute des crayons où la température est la plus élevée, un phénomène d'amplification réciproque se produisait.

Cette analyse des faits a été vérifiée en mesurant la couche d'oxyde qui se forme à la surface de la gaine d'un crayon irradié en plusieurs points le long de la gaine. Les mesures ont été effectuées à l'aide d'une sonde à courants de Foucault. Elles ont montré que l'épaisseur d'oxyde augmente de façon importante du bas vers le haut. Par exemple, cette épaisseur, pour une des gaines de combustible analysées irradiée à une valeur dépassant 40,000 MWj/tU, est aux alentours de 18 $\mu$m en partie basse et atteint 50 $\mu$m en partie haute. La demanderesse a également constaté que l'épaisseur est une fonction croissante de la température à l'interface entre le métal et l'oxyde pendant le séjour du combustible dans le réacteur. L'épaisseur accrue d'oxyde en partie haute augmente encore la température et donc la formation de l'oxyde.

Pour réduire ce phénomène d'augmentation de la corrosion en partie haute des gaines, la demanderesse a donc cherché à augmenter les échanges thermiques qui interviennent entre chaque crayon et l'eau sous pression en partie haute du crayon. Dans ce but, l'invention propose notamment un assemblage combustible tel que défini dans la revendication 1. Dans un tel assemblage, les grilles supérieures assurent un brassage du réfrigérant (eau sous pression) par mélange des filets de réfrigérant plus intense que celui provoqué par les grilles supérieures de l'art antérieur.

On peut ainsi obtenir :

- un retard dans l'apparition de la corrosion sur la surface des crayons en partie haute des assemblages et ce, grâce à :
- un meilleur mélange du réfrigérant en partie haute de l'assemblage, tout en conservant pour ce dernier une perte de charge compatible avec un bon fonctionnement du réacteur.
- un retard dans la formation de l'oxyde en partie haute des gaines, sans pour autant pénaliser la partie basse de l'assemblage,

Dans un mode avantageux de réalisation, les grilles supérieures sont munies d'ailettes et les grilles inférieures en sont dépourvues. En général, la dernière grille située à proximité de l'extrémité supérieure de l'assemblage s'en trouve également démunie.

Dans un autre mode avantageux de réalisation, les grilles supérieures sont de type allégé ; elles peuvent être du genre décrit dans le document EP-A-O 239 441. Elles comportent alors une ceinture périphérique et au moins deux séries de plaquettes parallèles, les plaquettes d'une série étant obliques par rapport à celles des autres de façon que les séries délimitent des alvéoles de passage de crayons; les plaquettes parallèles sont réparties en au moins deux lits espacés dans le sens longitudinal de l'assemblage, munies de demi-ailettes présentant des orientations différentes dans les deux lits.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1 est une courbe représentant l'oxydation externe de la gaine en zircaloy d'un crayon combustible qui montre l'évolution de l'épaisseur de la couche d'oxyde (zircone) en fonction de la position de la gaine par rapport aux grilles d'un assemblage de type connu.
- la figure 2 est une vue schématique d'un assemblage combustible de type PWR comportant des grilles espacées selon l'invention.
- la figure 3 est un schéma en perspective de grilles supérieures allégées comprenant deux lits, montrant une disposition possible des ailettes.
- la figure 4 est un schéma en perspective montrant une disposition possible des ailettes dans une grille mélangeuse supérieure à deux lits de plaquettes.
- la figure 5 est une vue en élévation montrant, de façon plus réaliste que les figures 3 et 4, une forme possible des plaquettes constitutives d'une grille supérieure.
- la figure 6 est une vue de dessus d'un fragment de la figure 5,
- la figure 7 est une vue très schématique, en perspective et à grande échelle, montrant l'entrecroisement des plaquettes d'une grille à simple lit pour délimiter un alvéole.
- la figure 8 est un schéma de principe en perspective, où l'échelle n'est pas respectée, montrant les bossages ménagés sur deux des parois d'une grille inférieure de l'assemblage.
- la figure 9 est une vue en coupe suivant la ligne IX-IX de la figure 8.

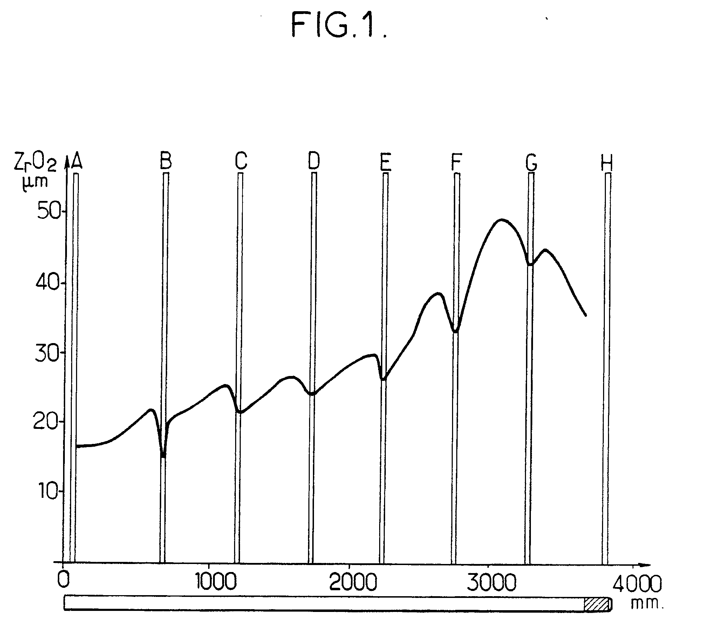

La courbe de la figure 1 montre l'évolution de l'épaisseur de la couche de zircone sur la surface d'un crayon en fonction de la position dans l'assemblage, et ce pour un assemblage de type connu.

On a porté en abcisse la distance entre l'extrémité de la partie inférieure du crayon et la partie du crayon où s'effectue la mesure, et en ordonnée l'épaisseur de couche d'oxyde mesurée. L'emplacement des grilles réparties axialement le long du crayon est représenté sur la figure 1 par des barres verticales identifiées de A à H, la grille désignée par A étant la grille située la plus près de la pièce d'extrémité inférieure de l'assemblage et donc du bouchon inférieur du crayon examiné.

Cette courbe, issue des mesures effectuées par le demandeur, fait apparaître que :

- la couche de zircone est nettement plus épaisse entre les grilles E et H qu'entre les grilles situées en partie basse de l'assemblage.
- l'épaisseur de la couche d'oxyde est moins importante, par rapport à l'amont immédiat des grilles, non seulement à la hauteur même des grilles, mais aussi immédiatement en aval de celles-ci.
- enfin, et c'est une constatation expérimentale, selon les grilles cet effet est sensible sur environ 10 à 30 cm en aval des grilles, la couche de zircone redevenant ensuite plus épaisse dans l'intervalle intergrilles pour atteindre un pic un peu après le milieu de l'intervalle entre les grilles F et G.

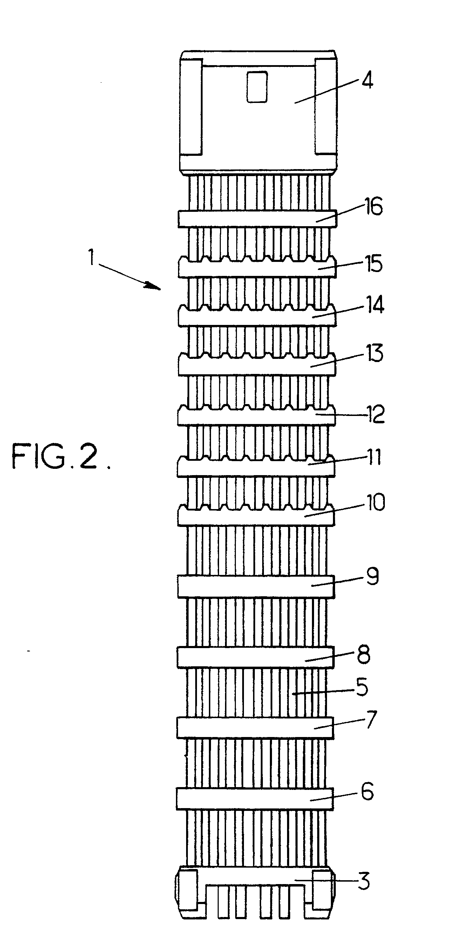

La figure 2 représente schématiquement un assemblage 1, comportant un squelette qui comprend une pièce d'extrémité inférieure 3 et une pièce d'extrémité supérieure 4, reliées par des éléments allongés tels que des tubes guides 5.

Il est muni de grilles inférieures 6, 7, 8, 9 et de grilles supérieures 10, 11, 12, 13, 14, 15, 16, l'espacement existant entre les grilles supérieures situées dans la moitié supérieure de l'assemblage 1 étant moindre que l'espacement existant entre les grilles inférieures situées dans la moitié inférieure de l'assemblage 1. Dans le cas particulier représenté, l'assemblage comporte sept grilles supérieures et quatre grilles inférieures, ces nombres n'étant pas limitatifs.

L'implantation des sept grilles supérieures permet un meilleur mélange du réfrigérant, à puissance du réacteur et température du réfrigérant égales, en partie haute de l'assemblage ; celle-ci entraîne une température de la gaine plus faible et permet donc de ralentir la croissance de la couche d'oxyde dans cette partie. La formation de la corrosion sur les crayons dans la partie comprise entre les grilles E et H de la figure 1 s'en trouve de ce fait retardée.

Selon une disposition avantageuse de l'invention, le nombre de grilles en partie supérieure est considéré comme doublé, les crayons étant entretoisés par des grilles disposées axialement tous les 25 cm.

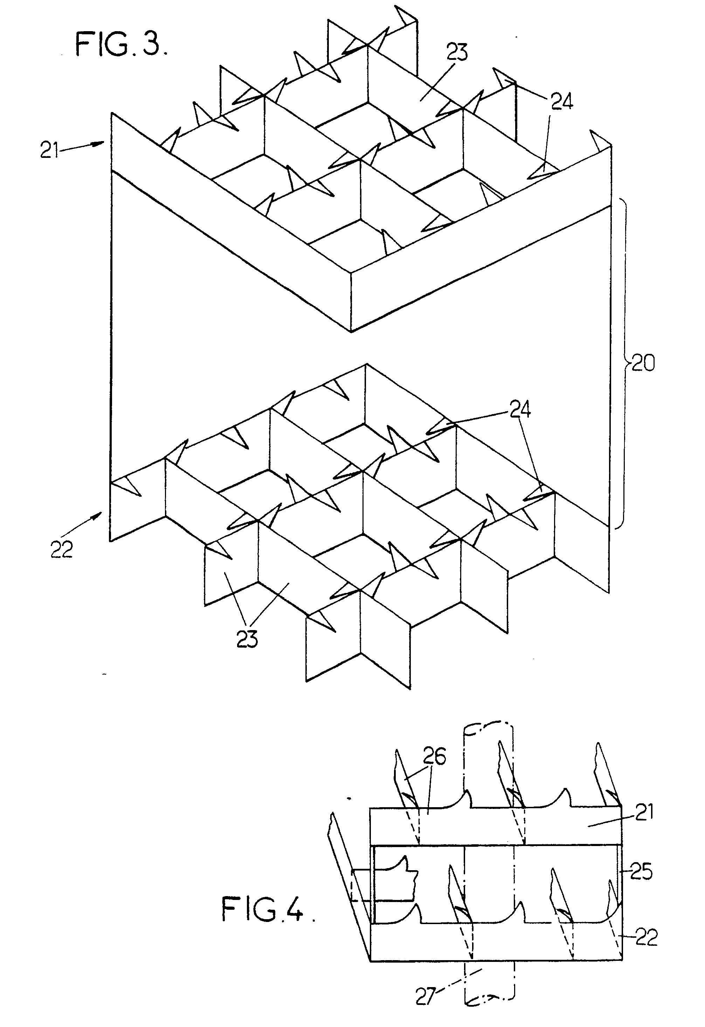

La figure 3 montre schématiquement une grille 20 pouvant être adoptée comme grille supérieure dans un assemblage selon l'invention. Elle comprend deux lits parallèles 21 et 22 de plaquettes 23 de maintien et d'espacement des crayons. Les plaquettes sont munies d'ailettes de mélange 24, de façon à assurer, en plus de leur fonction de supportage, une fonction de mélange des filets fluides.

La figure 4 montre un type de grille mélangeuse à deux lits 21 et 22. Les lits sont reliés par des tiges ou barrettes d'angle 25. Chaque lit comprend des plaquettes 26 montées suivant deux directions différentes. On notera que chaque lit de plaquettes tel qu'apparaissant sur les figures 3 et 4 est incomplet en ce sens qu'un alvéole de réception de crayons 27 n'est complètement délimité que par des plaquettes appartenant aux deux lits.

Les grilles supérieures peuvent être du type de celles décrites dans le document EP-A-0 239 441, mais d'autres types de grilles sont également utilisables dans un assemblage suivant l'invention.

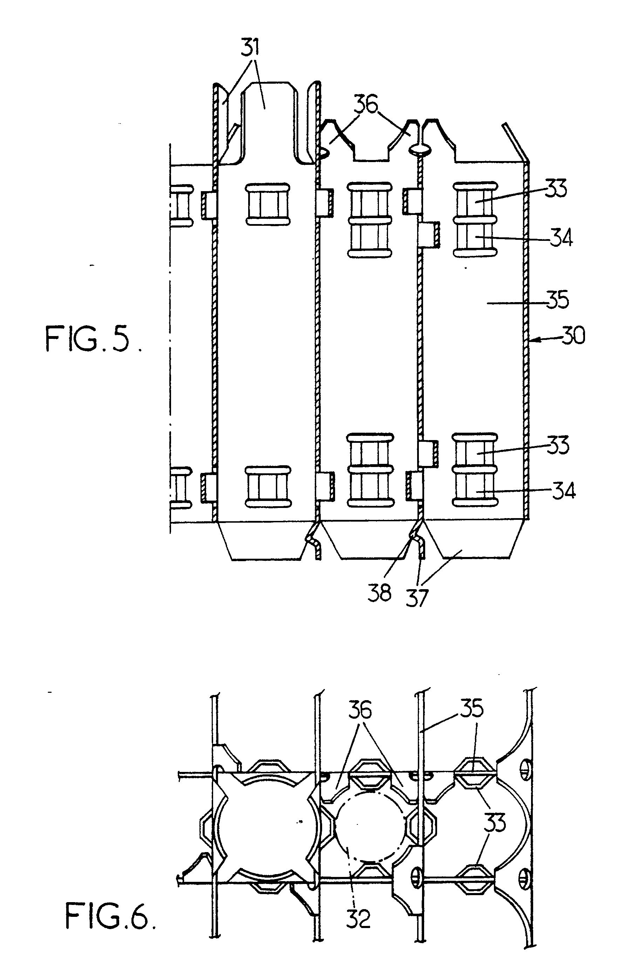

Les figures 5 et 6 montrent une réalisation possible des grilles supérieures à un seul lit et font apparaître des languettes de fixation 31 de la grille 30 sur certains des tubes-guide.

La grille 30 assure une fonction d'entretoisement des crayons 32, par des bossages 33, 34 placés sur chaque face des plaquettes 35 à deux niveaux. Elle introduit des turbulences dans l'écoulement du fluide de refroidissement traversant de bas en haut l'assemblage par des ailettes 36, par exemple du type décrit dans le document EP-A-0 187 578.

Pour augmenter encore la rigidité de la grille, certaines au moins des plaquettes se prolongent avantageusement par une lèvre 37 présentant un pli longitudinal 38 de raidissement.

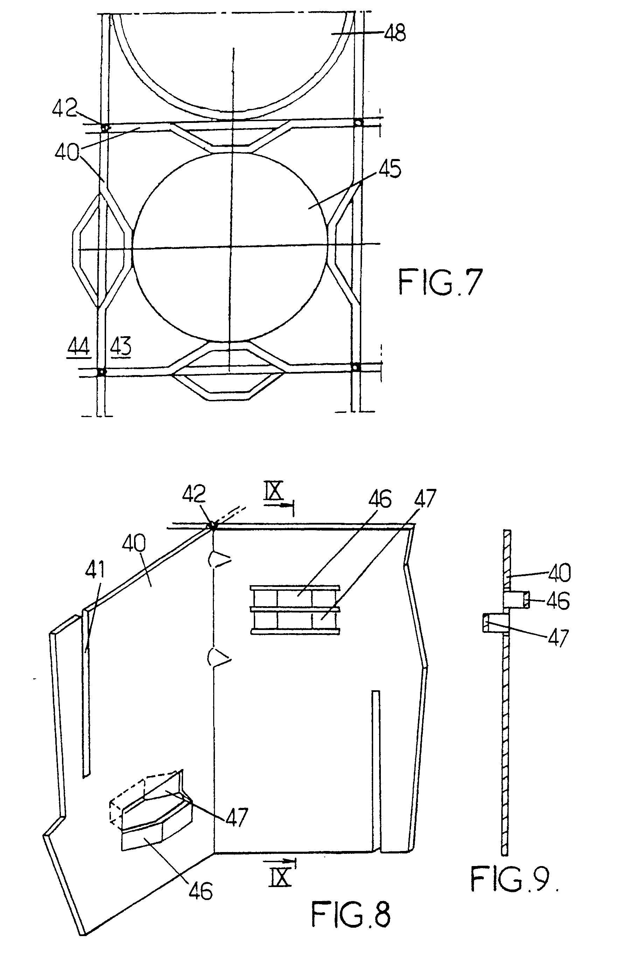

La figure 7 montre l'aspect, en vue de dessus, des grilles inférieures. Ces grilles comportent deux jeux de plaquettes 40 dans lesquelles sont ménagées des fentes 41 d'assemblage à mi-fer (figure 8). Une fois emboîtées, les plaquettes sont fixées par soudage en des points 42 par exemple par faisceau d'électrons. Les plaquettes 40 sont embouties de façon à créer des bossages faisant saillie de chaque côté de la plaquette, dans deux alvéoles adjacents, tels que les alvéoles 43 et 44 sur la figure 7. Ces bossages assurent l'entretoisement latéral des crayons de matériau fissile, tels que le crayon 45 sur la figure 7.

Les grilles représentées sur les figures 7, 8 et 9, comportent sur chaque face d'un alvéole, un seul bossage. Les bossages correspondant à l'alvéole 43 sont désignés par la référence 46 sur les figures 8 et 9. Les bossages sur deux faces sont à un niveau différent de celui des bossages portés par les deux faces perpendiculaires. Chaque crayon de matériau fissile 45 est donc entretoisé. latéralement par contact avec quatre bossages. A chaque bossage 46 est associé un bossage 47 orienté en sens opposé, sauf dans le cas des parois qui délimitent un alvéole occupé par un tube guide 48 (figure 7). Les grilles inférieures ne comportent pas d'ailettes. Elles ne participent donc que faiblement au mélange des filets fluides et, en conséquence, n'introduisent qu'une très faible perte de charge.

L'invention ne se limite nullement aux modes de réalisation qui ont été décrits. Elle en couvre toutes les variantes dans le cire des revendications et notamment celles où les grilles ont une section polygonale non rectangulaire.

**Revendications**

1.  Assemblage combustible de coeur de réacteur nucléaire refroidi par un réfrigérant traversant le coeur du bas vers le haut, comportant un faisceau de crayons combustibles munis d'une gaine en alliage à base de zirconium, les crayons étant maintenus selon un réseau de pas déterminé au moyen de grilles d'espacement réparties le long du faisceau et, traversées par les crayons et en appui contre ceux-ci, dans lequel les grilles consistent en :

- des grilles inférieures (6,7,8,9) toutes identiques, dépourvues d'ailettes de brassage du réfrigérant et réparties à des intervalles égaux le long des crayons dans la partie inférieure de l'assemblage, et
- des grilles supérieures (10, 11,12,13,14, 15,16) qui, à l'exception de la grille extrême haute (16), sont toutes identiques, munies d'ailettes de brassage du réfrigérant et réparties à des intervalles égaux et moindres que celui des grilles inférieures (6,7,8,9), la grille extrême haute étant dépourvue d'ailettes.

2. Assemblage combustible selon la revendication 1, caractérisé en ce que les grilles supérieures (10, 11, 12, 13, 14, 15, 16) sont espacées l'une de l'autre d'une distance comprise entre 15 cm et 30 cm.

3. Assemblage combustible selon la revendication 1, caractérisé en ce que les grilles supérieures comportent une ceinture périphérique et au moins deux séries de plaquettes (23; 26) parallèles, les plaquettes d'une série étant obliques par rapport à celles des autres de façon que les séries délimitent des alvéoles de passage de crayons, les dites plaquettes parallèles étant réparties en au moins deux lits (21 et 22) espacés dans le sens longitudinal de l'assemblage, munies d'ailettes (24) présentant des orientations différentes dans les deux lits (21, 22).

## Claims

1. Fuel assembly for a nuclear reactor for a core cooled by a coolant passing through the core from the bottom upwardly, comprising a bundle of fuel elements provided with a zirconium base alloy sheath, the elements being held in an array having a predetermined pitch by spacer grids distributed along the bundle and traversed by the elements and supported against the latter, wherein the grids consist of:
- lower grids (6,7,8,9) mutually identical, devoid of coolant mixing fins and distributed at mutually equal intervals along the elements in the lower portion of the assembly, and
- upper grids (10,11,11,13,14,15,16) which, except the uppermost grid (16), are mutually identical, provided with coolant mixing fins and distributed at intervals which are equal and smaller than that of the lower grids (6,7,8,9), the uppermost grid being devoid of fins.

2. Fuel assembly according to claim 1, characterized in that the upper grids (10,11,12,13,14,15,16) are mutually separated by a distance comprised between 15 and 30 cm.

3. Fuel assembly according to claim 1, characterized in that the upper grids comprise a peripheral belt and at least two sets of parallel plates (23, 26), the plates of one set being oblique with respect to those of the other sets, whereby the sets define passage cells for the elements, said parallel plates being distributed in at least two beds (21, 22) spaced in the longitudinal direction of the assembly, provided with fins (24) having different orientations in the two beds (21, 22).

## Ansprüche

1. Kernreaktorbrennelement, das durch ein Kühlmittel gekühlt wird, welches den Kern von unten nach oben durchströmt, mit einem Brennstabbündel, das eine Legierungsummantelung auf der Grundlage von Zirkon aufweist, wobei die Brennstäbe in Form eines Gitters gehalten sind, dessen Schrittweite durch Abstandsgitterroste bestimmt wird, die über der Länge des Bündels verteilt sind und durch welche die Stäbe hindurchgehen und an ihnen anliegen, wobei die Gitterroste umfassen:

untenliegende Gitterroste (6, 7, 8, 9), die alle identisch sind, keine Kühlrippen aufweisen und gleichbeabstandet längs der Brennstäbe am unteren Teil des Brennelements verteilt sind, sowie

obenliegende Gitterroste (10, 11, 12, 13, 14, 15, 16), die mit Ausnahme des äußersten oberen Gitterrosts (16) alle identisch sind, Kühlrippen aufweisen und mit gleichen Abständen verteilt sind, die geringer als diejenigen der untenliegenden Gitterroste (6, 7, 8, 9) sind, wobei der äußerste obere Gitterrost keine Kühlrippen hat.

2. Kernreaktorbrennelement nach Anspruch 1, dadurch gekennzeichnet, daß die obenliegenden Gitterroste durch einen Abstand zwischen 15 cm und 30 cm voneinander beabstandet sind.

3. Kernreaktorbrennelement nach Anspruch 1, dadurch gekennzeichnet, daß die obenliegenden Gitterroste eine Außenumrahmung und mindestens zwei Reihen von parallelen Platten (23; 26) aufweisen, wobei die Platten der einen Reihe schräg sind in bezug auf diejenigen der anderen Reihen, so daß sie die Durchgangszellen der Stäbe begrenzen, wobei die parallelen Platten, die in wenigstens zwei in Längsrichtung des Brennelements beabstandete Lagen (21 und 22) aufgeteilt sind, mit Rippen (24) versehen sind, die innerhalb der zwei Lagen (21, 22) unterschiedliche Ausrichtungen aufweisen.

# FIG.1.

FIG.2.

FIG.3.

FIG.4.

FIG.5.

FIG.6.

FIG.7

FIG.8

FIG.9.